# EUROPÄISCHE PATENTSCHRIFT

(11) **EP 1 630 023 B1**
(45) Veröffentlichungstag und Bekanntmachung des Hinweises auf die Patenterteilung: **05.03.2008**
(21) Anmeldenummer: 05014975.6
(22) Anmeldetag: 11.07.2005
(51) Int. Cl.: B60J 7/20

(54) **Cabriolet-Fahrzeug mit zumindest einem Verkleidungsteil**
Cabriolet vehicle with at least one cover flap
Cabriolet avec au moins un volet de fermeture

(30) Priorität: 27.08.2004 DE 102004041541
(43) Veröffentlichungstag der Anmeldung: 01.03.2006
(73) Patentinhaber: Wilhelm Karmann GmbH, 49084 Osnabrück (DE)
(72) Erfinder: Weissmüller, Olaf, 49565 Bramsche (DE); Rußke, Klaus, 49143 Bissendorf (DE)

(56) Entgegenhaltungen:
- EP-A- 0 860 313
- DE-U1- 29 602 762
- FR-A- 2 839 474

## Beschreibung

Die Erfindung betrifft ein Cabriolet-Fahrzeug mit einem bei seiner Öffnung zumindest im wesentlichen unterhalb einer Eintrittsöffnung in der Karosserie ablegbaren Dach, wobei die Eintrittsöffnung zumindest bereichsweise durch ein oder mehrere Verkleidungsteil(e) abdeckbar ist, nach dem Oberbegriff des Anspruchs 1.

Es ist üblich, zumindest solche Verkleidungsteile, die auch bei geschlossenem Dach in ihrer Freigabestellung verbleiben, zum Erreichen dieser Freigabestellung aus einer bündig mit umgebenden Außenflächen liegenden Abdeckstellung abzusenken und sie unterhalb von Außenflächen optisch zu verbergen, um die Eintrittsöffnung möglichst vollständig freizugeben und dadurch beispielweise in quer außen liegenden Bereichen den Durchtritt seitlicher Gestängeteile des Daches zu ermöglichen. Dabei soll häufig das Packmaß des Verkleidungsteils in seiner freigebenden Stellung möglichst klein sein, obwohl die abgedeckte Fläche in abdeckender Stellung möglichst groß sein soll.

Die DE 39 03 679 C1 zeigt ein mehrteiliges Verkleidungsteil der Eintrittsöffnung, bei dem ein Teilabschnitt des Verkleidungsteils gegen einen anderen um eine Schwenkachse einklappbar ist. Ein derartiger Mechanismus ist jedoch nur für planebene oder für mit passend zueinander ausgeführten Knickstellen versehene Teilabschnitte des Verkleidungsteils zufriedenstellend, da sich bei gekrümmten Flächen, die im ausgeschwenkten Zustand gleichsinnig gewölbt nebeneinander liegen, im eingeschwenkten Zustand die Wölbungen gegenseitig stören würden. Zudem bilden gegeneinander schwenkende Teile aufgrund des großen Schwenkradius' leicht eine Kollisionsgefahr und beim Einschwenken eine Klemmgefahr.

Die FR 2 839 474 A zeigt ein Fahrzeug mit einer Hutablage als Verkleidungsteil für einen Teil einer Eintrittsöffnung des Daches in die Karosserie, wobei die Hutablage zwischen einer abdeckenden und eine freigebenden Stellung beweglich und in einen mittleren Teil und quer außen gelegene Seitenteile geteilt ist. Die Seitenteile sind gegenüber dem mittleren Teil ausschiebbar. Eine solche Lösung ist jedoch insbesondere auf quer außen liegende verkleidungsteile nicht anwendbar, da auch ineinander geschobene Teile einer solchen Verkleidung noch dem Bewegungsraum von seitlichen Gestängeteilen des Daches im Wege stehen könnten.

Der Erfindung liegt das Problem zugrunde, bei einem gattungsgemäßen Cabriolet-Fahrzeug eine möglichst platzsparende Halterung von insbesondere quer äußeren Verkleidungsteilen in freigebender Stellung zu erreichen.

Die Erfindung löst dieses Problem durch ein Cabriolet-Fahrzeug mit den Merkmalen des Anspruchs 1. Vorteilhafte Ausgestaltungen und Weiterbildungen der Erfindung sind in den weiteren Ansprüchen 2 bis 11 angegeben.

Mit der erfindungsgemäßen Ausbildung sowohl nach Anspruch 1 als auch nach Anspruch 3, nach denen zumindest ein Verkleidungsteil in zwei oder mehr Teile geteilt ist und zur Einstellung der abdeckenden Stellung ein zweiter Teil gegenüber dem ersten ausschiebbar und zudem das Verkleidungsteil insgesamt in freigebender Stellung hochkant und einwärts verlagerbar ist, können die Teile in freigebender Stellung eng ineinander geschachtelt sein und mit ihren Wölbungen gleichsinnig zueineinander und insgesamt außerhalb des Bewegungsraumes der Gestängeteile liegen. Auch bei nicht gewölbten Oberflächen der Teile der Verkleidung ergibt sich ein flaches Packmaß, da Scharniere oder dergleichen Bauteile entfallen.

Eine besonders günstige Stellung des freigebenden Verkleidungsteils ergibt sich gemäß Anspruch 1, wenn dieses dann zumindest teilweise in Richtung einer vertikalen Fahrzeuglängsmittelebene verlagert, hochkant gestellt und quer zum Fahrzeug erstreckt Lage unterhalb der Ebene der Eintrittsöffnung gehalten ist.

Eine besonders einfache Handhabung und kostengünstige Ausbildung eines solchen Verkleidungsteils, das insgesamt mehrere Bewegungen zwischen der freigebenden Stellung über die Zwischenstellung zur abdeckenden Stellung durchführen muß und das zudem noch die relative Ausschubbewegung der Teile erforderlich macht, ergibt sich, wenn gemäß Anspruch 3 für alle diese Bewegungen ein gemeinsames Gestänge vorgesehen ist.

Ein besonders guter Schutz ergibt sich, wenn ein kleineres Teil in einem großen nach Art einer Schublade aufgenommen ist, wobei entweder das kleinere Teil oder das größere Teil nach Art einer Hülse verschieblich sein kann. Auch können beide Teile gegeneinander relativbeweglich sein.

Wenn beide Teile in abdeckender Stellung bündig aneinander angrenzen, ist optisch eine Beeinträchtigung des Zustands mit geöffnetem Dach, der eine besonders hohe Ästhetik bieten soll, vermieden.

Für das verkantungsfreie Ein- und Ausschieben des relativbeweglichen Teils kann eine Führungsschiene in dem anderen Teil vorgesehen sein, etwa eine ausgenommene Kulisse. Diese kann, um die bündige Lage der Teile nebeneinander zu ermöglichen, teilweise gekrümmt oder insgesamt schräg abwärts verlaufend ausgebildet sein.

Die Gesamtbewegung der Teile ist vereinfacht, wenn diese in ineinander eingefahrener Stellung in die freigebende Stellung verlagerbar sind. Die Bewegungsmechanik kann dann genau so ausgebildet sein, wie es auch für ein einstückiges Verkleidungsteil erforderlich wäre, ohne daß es irgendeines Zusatzaufwands bedarf. Auch sind die Längen- und Breitenerstreckung des mehrteiligen Verkleidungsteils im freigebenden gegenüber einem einstückigen Verkleidungsteil nicht vergrößert, so daß das Packmaß gering bleibt.

Insbesondere kann das Ein- und Ausschieben des relativbeweglichen Teils in einer im wesentlichen horizontalen, abdeckenden Stellung des anderen Teils vornehmbar sein, wodurch eine Kollisionsgefahr während der Bewegung des Verkleidungsteils gegenüber der Karosserie vermieden ist.

Dabei kann das Verkleidungsteil über ein Gestänge platzsparend eng an einer den Insassenraum begrenzenden Rückwand gehalten werden.

Die Verkleidungsteile können weiter besonders günstig in freigebender Stellung in zumindest einer parallel zu einer den Insassenraum rückseitig begrenzenden Rückwand gehaltenen Aufnahmebox liegen. Dadurch sind sie geschützt gehalten, wodurch auch in den Kofferraum eingeschobene Gepäckstücke die Verkleidungsteile und Gestänge nicht schädigen können. Insbesondere ist auch eine modulare Ausbildung derart möglich, daß die Aufnahmeboxen das Bewegungsgestänge enthalten und komplett an die Rückwand anmontiert werden können. Auch können in den Aufnahmeboxen eventuelle Elektromotore für die Bewegung der Verkleidungsteile geschützt mit angeordnet sein.

Falls bei geöffnetem Dach das vordere, bei geschlossenem Dach mit einem Windschutzscheibenrahmen verbundene Dachende in gleicher Orientierung abgelegt ist und seine bei geschlossenem Dach nach oben weisende Seite eine optische Abschlußfläche für einen wesentlichen Teil des mittleren Bereichs der Eintrittsöffnung ausbildet, fällt dieses Dachende zu seinen Querseiten hin bei üblicher Fahrzeuggestaltung ab, so daß gerade in diesen Randbereichen die Verwendung erfindungsgemäßer Verkleidungsteile optisch und mechanisch gut zu verwirklichen ist.

Die Verkleidungsteile können dann bei geöffnetem Dach seitlich und zumindest teilweise oberhalb von seitlichen Rändern des vorderen Dachendes liegen.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:
- Fig. 1: eine schematische, perspektivische und an der vertikalen Längsmittelebene sowie zum Fahrzeugbug abgebrochene Ansicht des hinteren Fahrzeugbereichs eines erfindungsgemäßen Cabriolet-Fahrzeugs bei in der Karosserie abgelegtem Dach und mit einem in Abdeckstellung liegenden Verkleidungsteil,
- Fig. 2: einen Ausschnitts aus Fig. 1, jedoch mit einem teilweise in das größere Teil eingeschobenen kleineren Teil des Verkleidungsteils,
- Fig. 3: eine ähnliche Ansicht wie Fig. 2 mit vollständig eingeschobenem kleinerem Teil,
- Fig. 4: eine ähnliche Ansicht wie Fig. 3 mit in hochkant aufgerichteter Zwischenstellung befindlichem Verkleidungsteil,
- Fig. 5: eine ähnliche Ansicht wie Fig. 4 während des Einschwenkens des Verkleidungsteils aus der zwischenstellung in die Freigabestellung,
- Fig. 6: eine ähnliche Ansicht wie Fig. 5 bei weiter im Freigabesinn verschwenktem Verkleidungsteil,
- Fig. 7: eine ähnliche Ansicht wie Fig. 6 bei vollständig in Freigabestellung verschwenktem Verkleidungsteil,

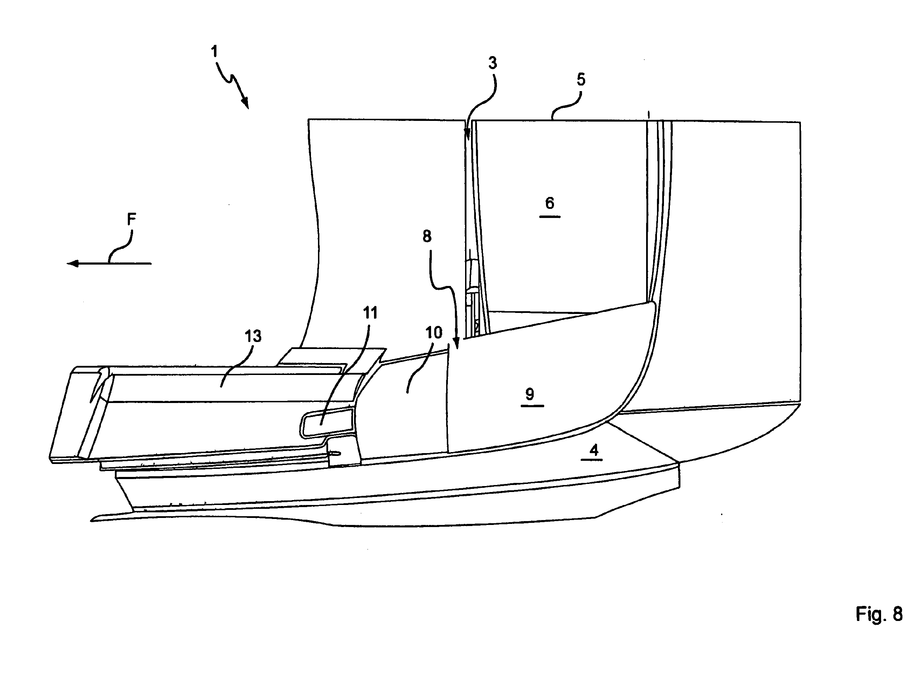

- Fig. 8: die Abdeckstellung nach Fig. 1 in Ansicht von oben,

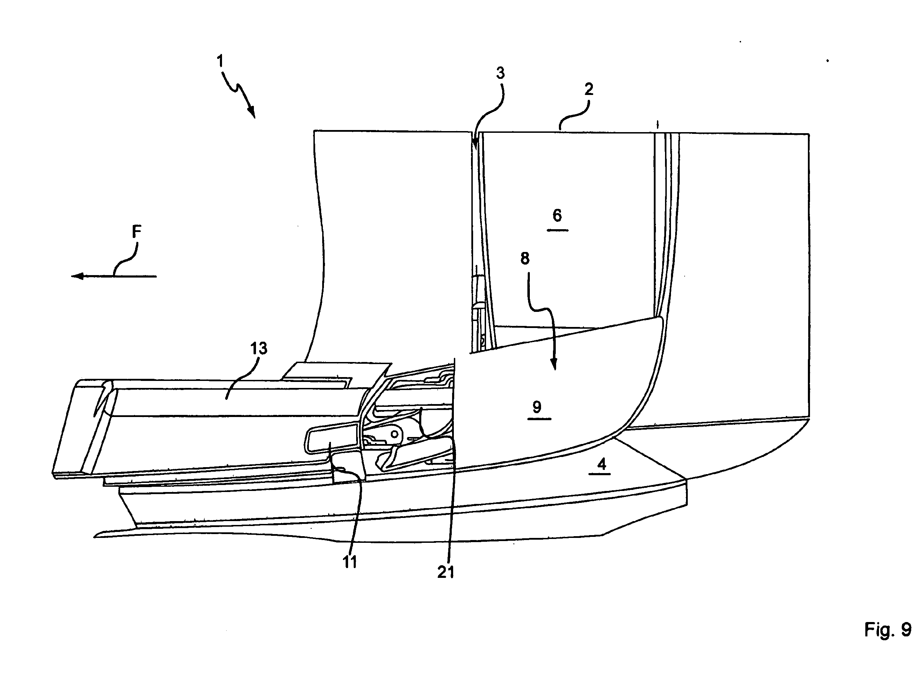

- Fig. 9: die Stellung nach Fig. 3 in Ansicht von oben,

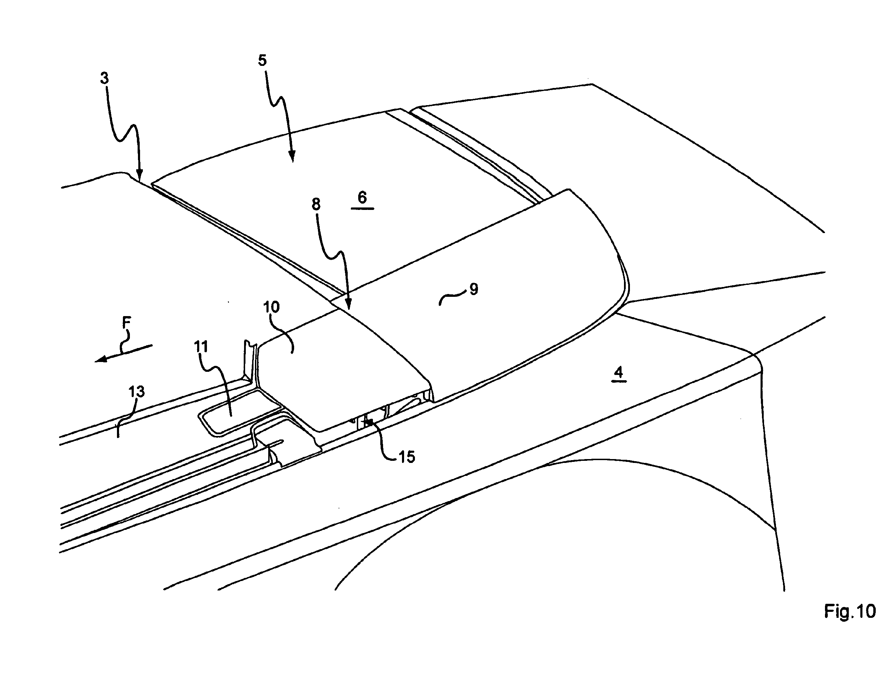

- Fig. 10: die Abdeckstellung nach Fig. 1 in Ansicht von schräg vorne,

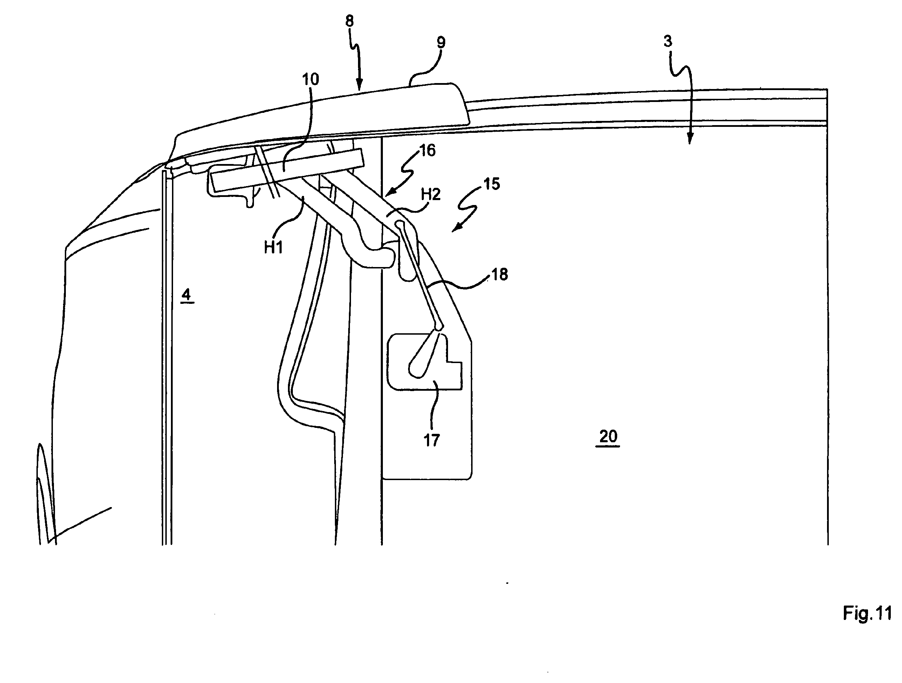

- Fig. 11: eine Ansicht von hinten auf das Verkleidungsteil mit ineinander verschachtelten Teilen,
- Fig. 12: eine Ansicht von hinten auf das Verkleidungsteil in Zwischenstellung,

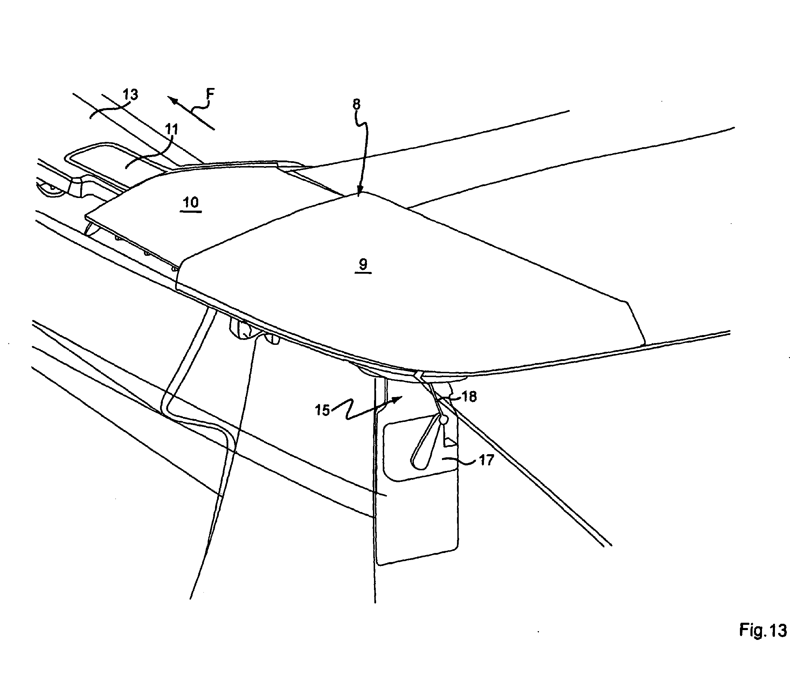

- Fig. 13: einen Detailausschnitt aus Fig. 1,

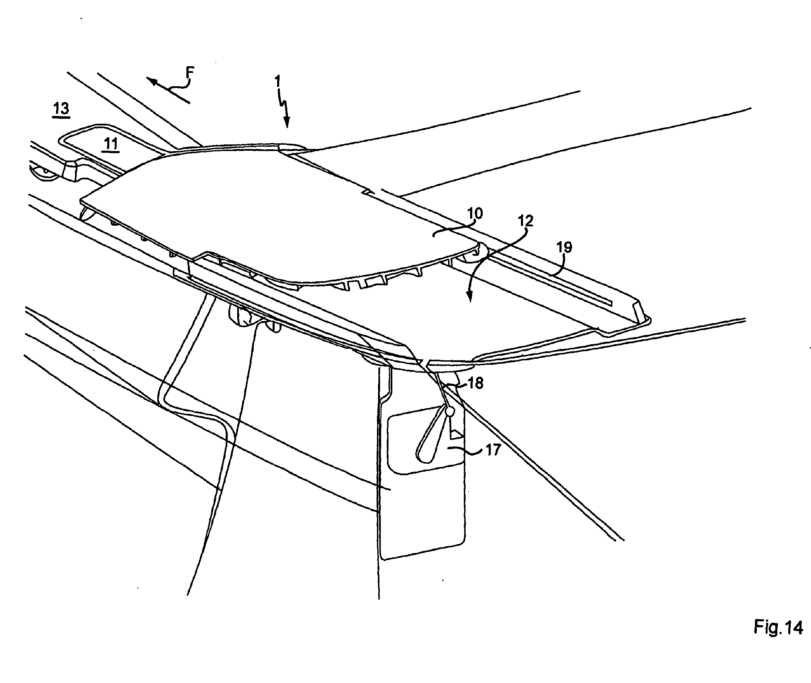

- Fig. 14: eine ähnliche Ansicht wie Fig. 13, jedoch mit zur besseren Übersicht abgenommener Oberfläche des größeren Teils des Verkleidungsteils,

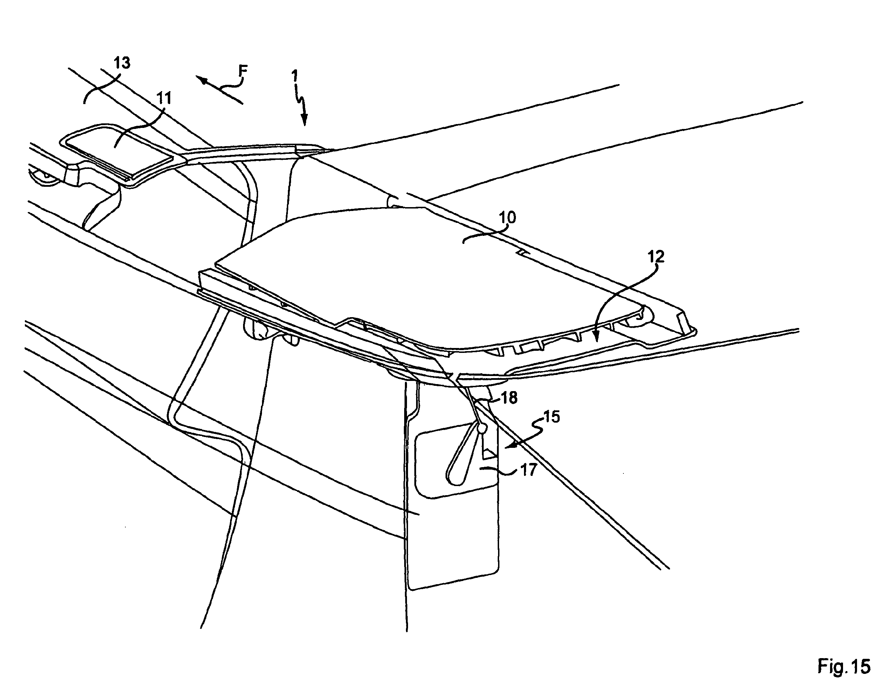

- Fig. 15: eine ähnliche Ansicht wie Fig. 14, jedoch mit in der eingefahrenen Stellung nach Fig. 3 befindlichem kleinerem Teil des Verkleidungsteils.

Das erfindungsgemäße Cabriolet-Fahrzeug 1 kann, wie im gezeichneten Ausführungsbeispiel angedeutet, sowohl ein mit einer Rückbank versehenes vier- oder fünfsitziges Fahrzeug als auch ein Zweisitzer sein.

Dabei kann das bewegliche und in geschlossener Stellung mittelbar oder unmittelbar an einen Windschutzscheibenrahmen anschließende Dach 2 separate und mit zumindest jeweils einem starren Rahmen versehene Baueinheiten bildende Dachteile umfassen oder, wie hier dargestellt, ein insgesamt mit einem gemeinsamen Bezug überzogenes Soft-Top bilden. Das Dach 2 kann manuell oder voll- oder teilautomatisch zu bewegen sein.

Das Dach 2 ist zu seiner Öffnung im hinteren Fahrzeugbereich ablegbar. Hierzu ist eine Eintrittsöffnung 3 in die Karosserie 4 vorgesehen. Im vorliegenden Ausführungsbeispiel ist das Dach 2 über eine sog. Z-Faltung in der Karosserie 4 ablegbar, wobei das im geschlossenen Zustand mit einem Windschutzscheibenrahmen verbundene vordere Dachende 5 seine Orientierung im abgelegten Zustand beibehält, also auch in abgelegter Stellung mit der Außenseite 6 nach oben weist.

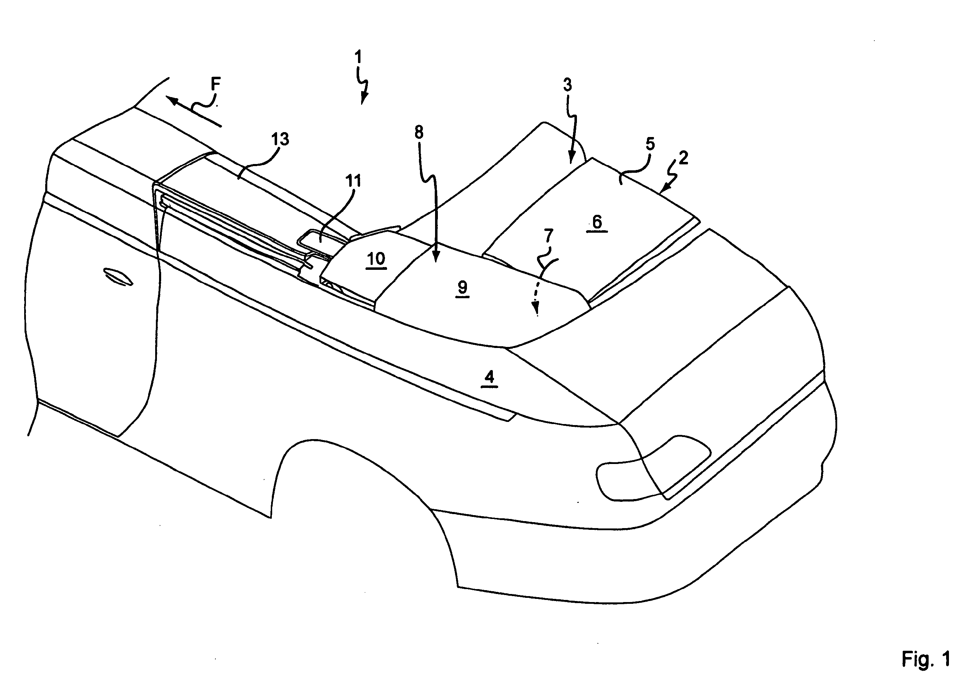

Dabei fallen die Querränder 7 des vorderen Dachendes 5 aufgrund der bombierten Dachform ab. Wenn der bezüglich der Fahrzeugquerrichtung mittlere Bereich des vorderen Dachendes 5 in etwa in der Ebene der Eintrittsöffnung 3 liegt, ragen daher die Querränder 7 weiter nach unten in die Karosserie 4. Bei geöffnetem Dach 2 kann somit dieses selbst mit seiner nach oben weisenden Seite 6 einen optischen Abschluß für einen wesentlichen Teil des mittleren Bereichs der Eintrittsöffnung 3 ausbilden. Ein übergreifender Deckel oder ähnliches ist dann hier entbehrlich. Aufgrund der abfallenden Querränder 7 ist außen hingegen eine gesonderte optische Abdeckung vorteilhaft und im Ausführungsbeispiel durch die symmetrisch an beiden Fahrzeugseiten liegenden Verkleidungsteile 8 erreicht, die in Fig. 1 in Abdeckstellung dargestellt sind.

Es versteht sich, daß je nach Ausbildung der Eintrittsöffnung und der Dachablage auch andere Bereiche durch bewegliche Verkleidungsteile abdeckbar sein können.

Die hier dargestellten beweglichen Verkleidungsteile 8 decken die Eintrittsöffnung 3 nur in quer außen liegenden Bereichen ab und liegen gemäß der Zeichnung bei geöffnetem Dach 2 seitlich und zumindest teilweise oberhalb von seitlichen Rändern 7 des vorderen Dachendes 5.

In Figur 1 ist jeweils ein zur Fahrtrichtung F linkes Verkleidungsteil 8 in abdeckender Stellung schematisch dargestellt. Dieses ist hier zweigeteilt und umfaßt ein schmaleres vorderes Teil 10 und ein breiteres hinteres Teil 9. Das vordere Teil 10 ist gegenüber dem hinteren 9 relativbeweglich und in eine von diesem gebildete Aufnahmeöffnung 12 nach Art einer Schublade einfahrbar. Anders als im Ausführungsbeispiel könnte auch das breitere Teil 9 relativbeweglich und nach Art einer unten geschlitzten Hülse ausgebildet und über das schmalere Teil 10 Verschieblich sein. Auch könnte beispielsweise in anderer Gestaltung der Geometrie eines Verkleidungsteils das schmalere Teil nach hinten oder quer zur Seite ausfahrbar sein. Ebenso können mehr als zwei Teile übereinander angeordnet und gegeneinander verschieblich sein.

Eine dem Verkleidungsteil 8 vorgeordnete weitere Abdeckung 11 kann beispielsweise an das schmalere Teil 10 in gleicher Weise beweglich angehängt oder - wie hier - separat beweglich und unterhalb einer karosseriefesten seitlichen Außenverkleidung 13 neben den Rücksitzen verfahrbar sein.

Zur Einstellung der Abdeckstellung (Fig. 1) ist das schmalere zweite Teil 10 gegenüber dem breiteren ersten Teil 9 ausgeschoben. Die von dem Verkleidungsteil 8 abdeckbare Fläche erreicht dabei ihre Maximalerstreckung. Die Außenflächen beider Teile 9, 10 liegen auf gleicher Höhe und grenzen bündig aneinander.

Das vordere Teil 10 ist in dem hinteren über seitliche Führungsschienen 19 geführt, die hier als Kulissen zum Eingriff von Rollen oder Gleitern ausgebildet sind und zum Ermöglichen einer bündigen Abdecklage der Teile 9, 10 aufwärts gekrümmt sein können. Die Relativbewegung des Teils 10 kann vornehmlich dann stattfinden, wenn das Teil 9 in seiner im wesentlichen horizontalen Abdeckstellung liegt. Auch eine Überlagerung dieser Bewegung mit den weiteren, das ganze Verkleidungsteil 8 betreffenden Bewegungen ist möglich.

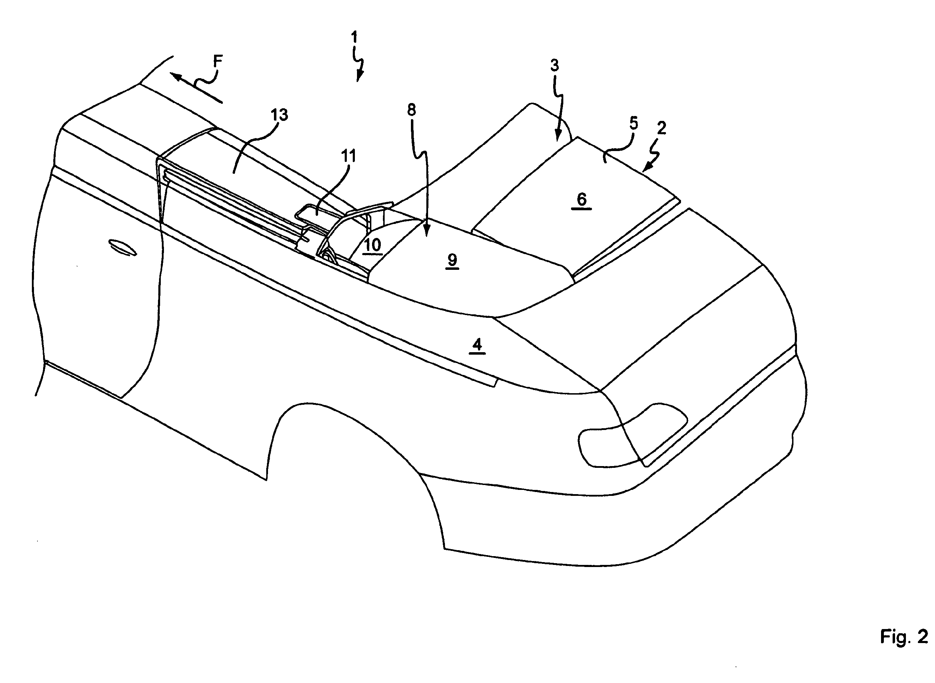

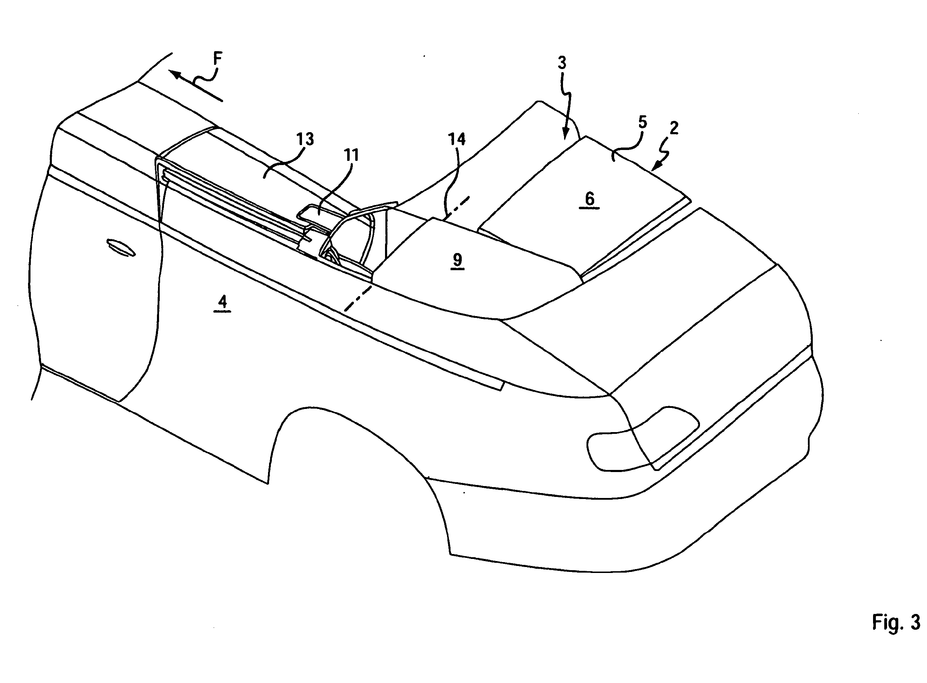

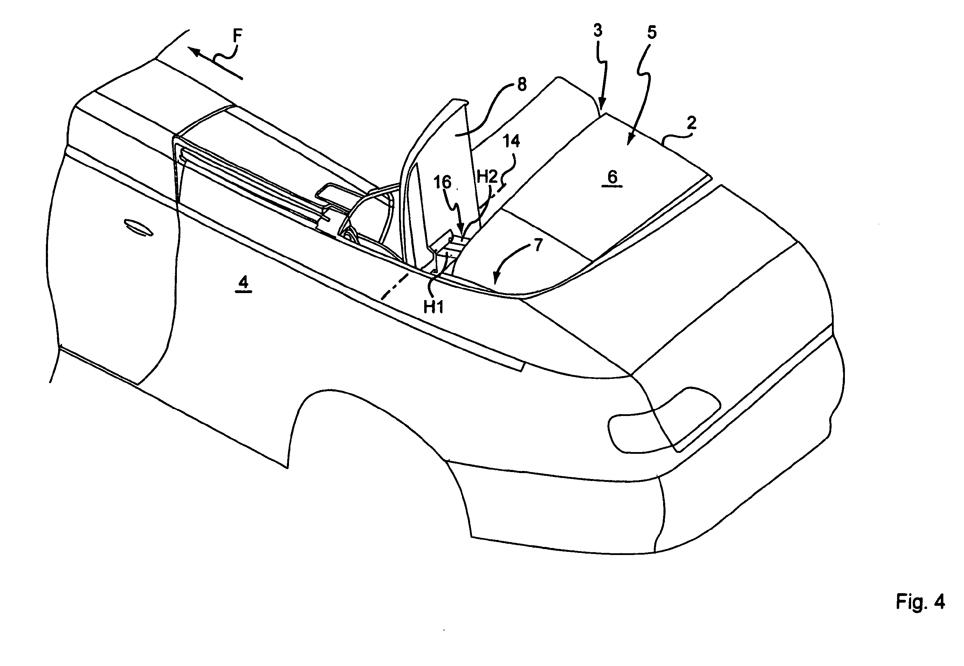

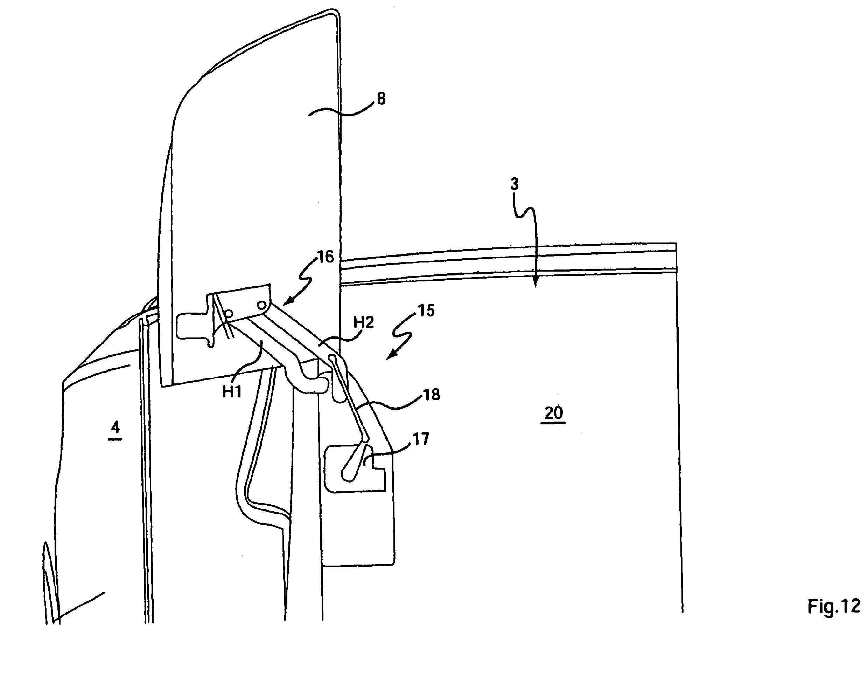

Hier ist zunächst das schmalere Teil 10 in das breitere Teil 9 manuell oder insbesondere über einen Antrieb einfahrbar (Fig. 2, Fig. 3); nachfolgend wird dann das nunmehr auf bis zu der Hälfte seiner ursprünglichen Erstreckung verkürzte Verkleidungsteil 8 über eine erste Bewegungsmechanik um eine quer zum Fahrzeug 1 gelegene Achse 14 in eine hochkant liegende Zwischenstellung aufwärts verschwenkt (Fig.4, Fig. 12). Die Schwenkrichtung ist je nach Lage des Verkleidungsteils variabel.

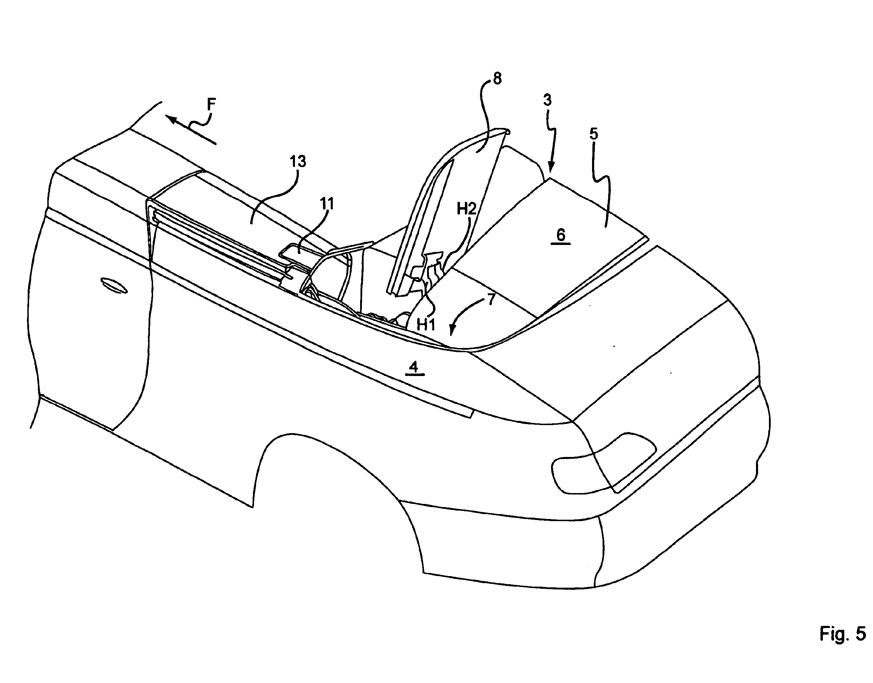

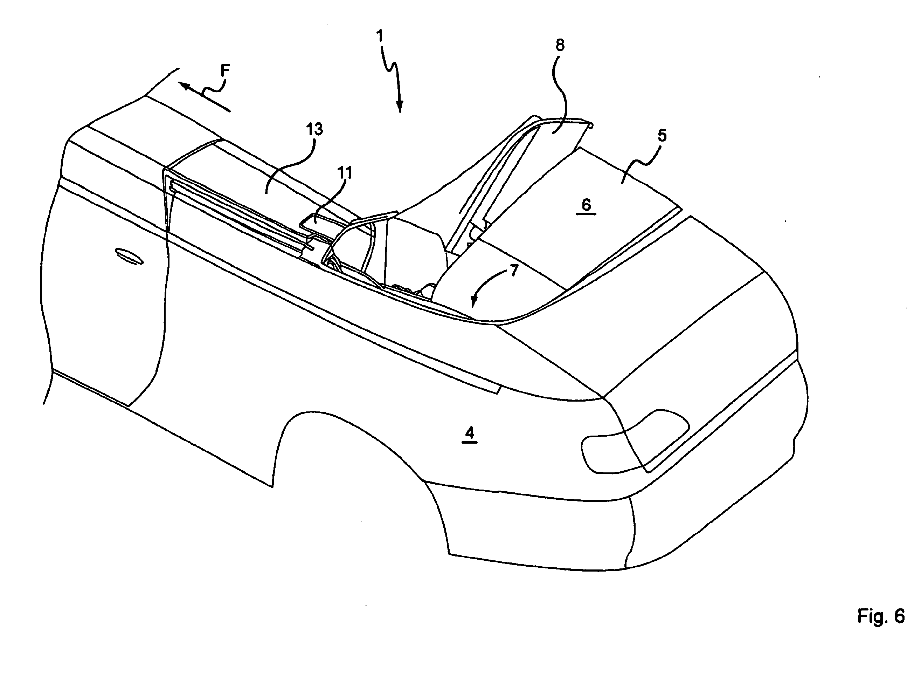

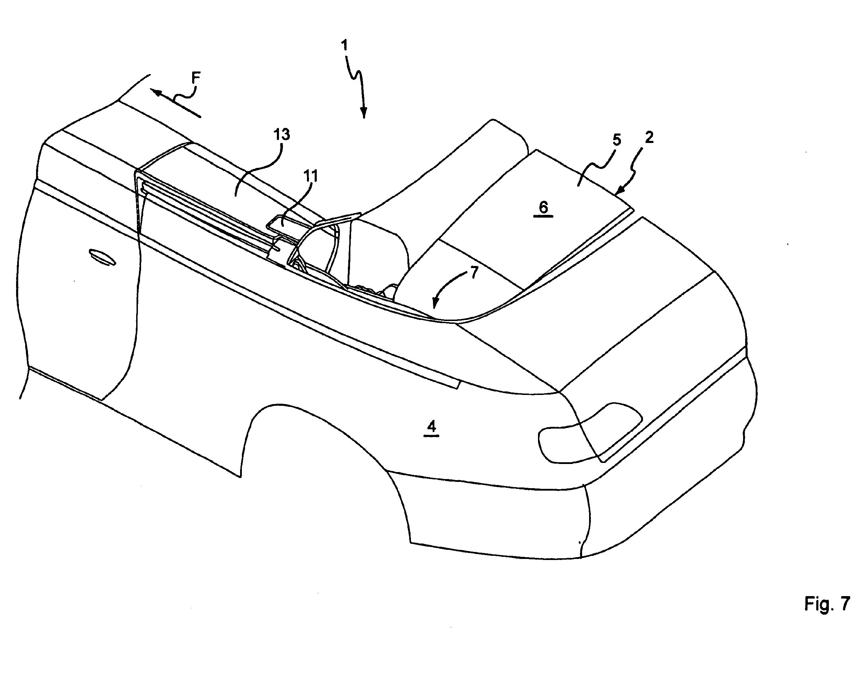

Diese Zwischenstellung ermöglicht dann ein Einwärtsverschwenken (Fig. 5 bis Fig. 7) quer zum Fahrzeug 1, um die in Fig. 7 gezeigte Freigabestellung zu erreichen. Auch eine überlagerte translatorische und rotatorische Bewegung ist je nach Orientierung der Verkleidungsteile 8 in Freigabestellung (hier zur Mitte hin weisend) möglich.

Für das Verschwenken ist ein Gestänge 15 vorgesehen, das außen an der Schublade mit dem eingefahrenen Teil 10 und dem Außenteil 9 angreift und hier ein Viergelenk 16 mit zwei karosseriefesten Gelenken und zwei dem Verkleidungsteil 8 zugeordneten, beweglichen Gelenken umfaßt. Das Gestänge 15 stört daher nicht die Ein- und Ausschubbewegung des Teils 10 gegen das Teil 9. Des weiteren ist dem Gestänge 15 jeweils ein Elektromotor 17 zugeordnet, der über eine Zug-SchubStange 18 auf einen der Lenker H1, H2 des Viergelenks 16 einwirkt. Der Antrieb 17 kann über eine entsprechende Kraftumlenkung auch das Schwenken des Verkleidungsteils 8 um die Achse 14 und die Ein- und Ausschubbewegung des Teils 10 gegenüber dem Teil 9 mit bewirken; hierfür kann alternativ auch ein zweiter Antrieb vorgesehen sein.

Das Gestänge 15 hält das jeweilige Verkleidungsteil 8 an einer den Insassenraum begrenzenden Rückwand 20 der Karosserie 4 und legt dieses in Freigabestellung flach daran an. Das Verkleidungsteil 8 steht daß dabei hochkant, so daß seine Erstreckungsebene vertikal oder gegen die Vertikale nur um wenige Grad geneigt ist, wobei die Neigung durch die Schrägstellung der Rückwand 20 vorgegeben ist. Zudem ist in Freigabestellung das Verkleidungsteil 8 insgesamt unter die (zumeist gekrümmte) Ebene der Eintrittsöffnung 3 abgesenkt und daher von außen bei abgelegtem Dach nicht sichtbar.

Dabei ist das Verkleidungsteil 8 zumindest so weit einwärts in Richtung einer vertikalen Längsmittelebene verlagert, daß seitlich genügend Raum für den Durchtritt von Gestängeteilen 21 des Daches 2 freigegeben ist.

Zusätzlich kann dem Gestänge 15 ein auf seitliche Gestängeteile 21 des abgelegten Daches 2 einwirkender Niederhalter zugeordnet sein, der mit dem Viergelenk 16 schwenkbar ist und ein auf die Gestängeteile 21 von oben aufschwenkbares Druckstück an dem äußeren der Hebel des Viergelenkes umfaßt. Dadurch sichert der Niederhalter sowohl in Zwischenstellung als auch in Abdeckstellung des Verkleidungsteils 8 das abgelegte Dach 2 gegen Bewegungen.

In den Ausführungsbeispielen sind die Verkleidungsteile 8 sowohl bei geschlossenem Dach 2 als auch während der Dachbewegung in Freigabestellung und nur bei geöffnetem Dach 2 in Abdeckstellung. Abweichend hierzu, kann es auch möglich sein, ein Verkleidungsteil auch bei vollständig geschlossenem Dach in Abdeckstellung zu halten.

## Patentansprüche

1. Cabriolet-Fahrzeug (1) mit einem zumindest im wesentlichen unterhalb einer Eintrittsöffnung (3) in der Karosserie (4) ablegbaren Dach (2), wobei die Eintrittsöffnung (3) bei abgelegtem Dach (2) zumindest bereichsweise durch ein oder mehrere zwischen einer abdeckenden und einer freigebenden Stellung bewegliche Verkleidungsteil(e) (8) abdeckbar ist und zumindest ein Verkleidungsteil (8) in zwei oder mehr Teile (9;10) geteilt ist und zur Einstellung der abdeckenden Stellung ein zweiter (10) Teil gegenüber dem ersten (9) ausschiebbar ist,
**dadurch gekennzeichnet,**
**daß** das Verkleidungsteil (8) zwischen der abdeckenden Stellung und einer hochkant gestellten Zwischenstellung verlagerbar und mit ineinander geschachtelten Teilen (9;10) aus der Zwischenstellung in eine freigebende Stellung einwärts verlagerbar ist, in der es gegenüber seiner abdeckenden Stellung in einer zumindest teilweise in Richtung einer vertikalen Fahrzeuglängsmittelebene verlagerten, hochkant gestellten und quer zum Fahrzeug erstreckten Lage unterhalb der Ebene der Eintrittsöffnung gehalten ist.

2. Cabriolet-Fahrzeug (1) nach Anspruch 1,
**dadurch gekennzeichnet,**
**daß** das Verkleidungsteil (8) zwischen der abdeckenden Stellung und der hochkant gestellten zwischenstellung um eine quer zum Fahrzeug (1) liegende Achse (14) schwenkbar und mit ineinander geschachtelten Teilen (9;10) aus der Zwischenstellung in die freigebende Stellung einwärts verschwenkbar ist.

3. Cabriolet-Fahrzeug (1) mit einem zumindest im wesentlichen unterhalb einer Eintrittsöffnung (3) in der Karosserie (4) ablegbaren Dach (2), wobei die Eintrittsöffnung (3) bei abgelegtem Dach (2) zumindest bereichsweise durch ein oder mehrere zwischen einer abdeckenden und einer freigebenden Stellung bewegliche Verkleidungsteil(e) (8) abdeckbar ist und zumindest ein Verkleidungsteil (8) in zwei oder mehr Teile (9;10) geteilt ist und zur Einstellung der abdeckenden Stellung ein zweiter (10) Teil gegenüber dem ersten (9) ausschiebbar ist, insbesondere nach einem der Ansprüche 1 oder 2, **dadurch gekennzeichnet, daß** das Verkleidungsteil (8) zwischen der abdeckenden Stellung und einer hochkant gestellten zwischenstellung verlagerbar und mit ineinander geschachtelten Teilen (9;10) aus der Zwischenstellung in eine freigebende Stellung einwärts verlagerbar ist,
und **daß** das Verkleidungsteil (8) jeweils an einem Gestänge (16) gehalten ist, das sowohl die Bewegungsmechanik für die Verlagerung des Verkleidungsteils (8) zwischen der Zwischenstellung und der freigebenden Stellung als auch die Bewegungsmechanik für dessen Verlagerung zwischen der Zwischenstellung und der abdeckenden Stellung als auch den Ausschubmechanismus der Teile (9;10) umfaßt.

4. Cabriolet-Fahrzeug (1) nach Anspruch 3,
**dadurch gekennzeichnet,**
**daß** das Gestänge (16) das jeweilige Verkleidungsteil (8) mit einer den Insassenraum begrenzenden Rückwand (20) der Karosserie (4) verbindet.

5. Cabriolet-Fahrzeug (1) nach einem der Ansprüche 1 bis 4,
**dadurch gekennzeichnet,**
**daß** bei geöffnetem Dach (2) das vordere, bei geschlossenem Dach (2) mit einem Windschutzscheibenrahmen verbundene Dachende (5) in gleicher Orientierung abgelegt ist und seine bei geschlossenem Dach nach oben weisende Seite (6) eine optische Abschlußfläche für einen wesentlichen Teil des mittleren Bereichs der Eintrittsöffnung (3) ausbildet und Verkleidungsteile (8) bei geöffnetem Dach (2) seitlich und zumindest teilweise oberhalb von seitlichen Rändern (7) des vorderen Dachendes (5) liegen.

6. Cabriolet-Fahrzeug (1) nach einem der Anspüche 1 bis 5,
**dadurch gekennzeichnet,**
**daß** das zweite Teil (10) schmaler als das erste (9) und in diesem nach Art einer Schublade (12) aufgenommen ist.

7. Cabriolet-Fahrzeug (1) nach Anspruch 6
**dadurch gekennzeichnet,**
**daß** das zweite Teil breiter als das erste ist und dieses hülsenartig umgreift.

8. Cabriolet-Fahrzeug (1) nach einem der Ansprüche 1 bis 7,
**dadurch gekennzeichnet,**
**daß** beide Teile (9;10) in abdeckender Stellung mit ihren Außenflächen bündig aneinander angrenzen.

9. Cabriolet-Fahrzeug (1) nach einem der Ansprüche 1 bis 8,
**dadurch gekennzeichnet,**
**daß** zum Ausschieben des relativbeweglichen Teils (10) zumindest eine Führungsschiene (19) vorgesehen ist.

10. Cabriolet-Fahrzeug (1) nach einem der Ansprüche 1 bis 9,
**dadurch gekennzeichnet,**
**daß** die Teile (9;10) des verkleidungsteils (8) in ineinander eingefahrener Stellung in eine den abgedeckten Bereich der Eintrittsöffnung (3) freigebende Stellung verlagerbar sind.

11. Cabriolet-Fahrzeug (1) nach einem der Ansprüche 1 bis 10,
**dadurch gekennzeichnet,**
**daß** das Ein- und Ausschieben des relativbeweglichen Teils (10) in einer im wesentlichen horizontalen, abdeckenden Stellung des anderen Teils (9) vornehmbar ist.

## Claims

1. A cabriolet vehicle (1) with a roof (2) able to be stored at least substantially underneath an entry opening (3) in the car body (4), wherein the entry opening (3), when the roof (2) is stored, is able to be covered at least in areas by one or more cladding parts (8) which are able to be moved between a covering and an uncovering position, and at least one cladding part (8) is divided into two or more parts (9;10) and a second part (10) is able to be pushed out with regard to the first part (9) in order to adjust the covering position,
**characterised in that**
the cladding part (8) Is able to be displaced between the covering position and an intermediate position set up on edge and is able to be displaced Inwardly with nested parts (9;10) out of the intermediate position into an uncovering position, in which it is held, compared with its covering position, underneath the plane of the entry opening in a location displaced at least partly in the direction of a vertical vehicle longitudinal midplane, set up on edge and extended transverse to the vehicle.

2. The cabriolet vehicle (1) according to claim 1,
**characterised in that**
the cladding part (8) is able to be pivoted between the covering position and the intermediate position set up on edge around an axle (14) lying transverse to the vehicle (1) and is able to be pivoted inwardly with nested parts (9;10) out of the intermediate position into the uncovering position.

3. The cabriolet vehicle (1) with a roof (2) able to be stored at least substantially underneath an entry opening (3) in the car body (4), wherein the entry opening (3), when the roof (2) is stored, is able to be covered at least In areas by one or more cladding parts (8) which are able to be moved between a covering and an uncovering position, and at least one cladding part (8) is divided into two or more parts (9;10) and a second part (10) is able to be pushed out with regard to the first part (9) in order to adjust the covering position in particular in accordance with one of claims 1 or 2, **characterised in that** the cladding part (8) is able to be displaced between the covering position and an intermediate position set up on edge and is able to be displaced inwardly with nested parts (9;10) out of the intermediate position into an uncovering position,
and **in that** the cladding part (8) is held in each case at a bar (16) which includes the movement mechanics for the displacement of the cladding part (8) between the intermediate position and the uncovering position and the movement mechanics for its displacement between the intermediate position and the covering position and the push-out mechanism for the parts (9;10).

4. The cabriolet vehicle (1) according to claim 3,
**characterised in that**
the bar (16) connects each cladding part (8) with a car body (4) rear wall (20) which delimits the passenger space.

5. The cabriolet vehicle (1) according to one of claims 1 to 4,
**characterised in that**
when the roof (2) is opened, the front roof end (5), which is connected with a windscreen frame when the roof (2) is closed, is stored in the same orientation and its side (6), which points upwards when the roof is closed, forms a visual finishing surface for a substantial part of the middle area of the entry opening (3), and cladding parts (8), when the roof (2) is opened, are situated laterally and at least partly above lateral edges (7) of the front roof end (5).

6. The cabriolet vehicle (1) according to one of claims 1 to 5,
**characterised in that**
the second part (10) is narrower than the first part (9) and is received in it in the manner of a drawer (12).

7. The cabriolet vehicle (1) according to claim 6
**characterised in that**
the second part is broader than the first part and encompasses it in a sleeve-like manner.

8. The cabriolet vehicle (1) according to one of claims 1 to 7,
**characterised in that**
in the covering position, both parts (9;10) border one another in a flush manner by their outer surfaces.

9. The cabriolet vehicle (1) according to one of claims 1 to 8,
**characterised in that**
at least one guide rail (19) is provided for pushing out the relatively movable part (10).

10. The cabriolet vehicle (1) according to one of claims 1 to 9,
**characterised in that**
the parts (9;10) of the cladding part (8), in the position retracted into one another, are displaceable into a position uncovering the covered area of the entry opening (3).

11. The cabriolet vehicle (1) according to one of claims 1 to 10,
**characterised in that**
the pushing-in and pushing-out of the relatively movable part (10) is able to be carried out in a substantially horizontal covering position of the other part (9).

## Revendications

1. Cabriolet (1) avec un toit (2) pouvant être retiré au moins pour l'essentiel en dessous d'une ouverture d'entrée (3) dans la carrosserie (4), l'ouverture d'entrée (3) pouvant être recouverte, lorsque le toit (2) est retiré, au moins de façon partielle par une ou plusieurs parties de revêtement (8) pouvant être déplacées entre une position recouvrante et une position de libération, et au moins une partie de revêtement (8) étant divisée en deux parties (9 ; 10) ou plus et une seconde partie (10) pouvant être tirée par rapport à la première partie (9) pour régler la position recouvrante,
**caractérisé en ce que**
la partie de revêtement (8) peut être déplacée entre la position recouvrante et une position intermédiaire posée sur chant et peut être déplacée vers l'intérieur à l'aide des parties (9 ; 10) imbriquées l'une dans l'autre de la position intermédiaire dans une position de libération, la partie de revêtement étant maintenue par rapport à sa position recouvrante en dessous du plan de l'ouverture d'entrée dans une position décalée au moins en partie en direction d'un plan médian longitudinal vertical du véhicule, posée sur chant et perpendiculaire au véhicule.

2. Cabriolet (1) selon la revendication (1),
**caractérisé en ce que**
la partie de revêtement (8) peut pivoter entre la position recouvrante et la position intermédiaire posée sur chant autour d'un axe (14) perpendiculaire au véhicule (1) et peut être pivotée vers l'intérieur avec les parties (9 ; 10) imbriquées l'une dans l'autre d'une position intermédiaire dans la position de libération.

3. Cabriolet (1) avec un toit (2) pouvant être retiré au moins pour l'essentiel en dessous d'une ouverture d'entrée (3) dans la carrosserie (4), l'ouverture d'entrée (3) pouvant être recouverte, lorsque le toit (2) est retiré, au moins de façon partielle par une ou plusieurs parties de revêtement (8) pouvant être déplacées entre une position recouvrante et une position de libération, et au moins une partie de revêtement (8) étant divisée en deux parties (9 ; 10) ou plus et une seconde partie (10) pouvant être tirée par rapport à la première partie (9) pour régler la position recouvrante, notamment selon l'une quelconque des revendications 1 ou 2,
**caractérisé en ce que**
la partie de revêtement (8) peut être déplacée entre la position recouvrante et une position intermédiaire posée sur chant et peut être déplacée vers l'intérieur avec les parties (9 ; 10) imbriquées l'une dans l'autre de la position intermédiaire dans une position de libération,
et **en ce que** la partie de revêtement (8) est respectivement maintenue contre une tringlerie (16) qui comprend aussi bien le mécanisme de déplacement pour le déplacement de la partie de revêtement (8) entre la position intermédiaire et la position de libération que le mécanisme de déplacement pour son déplacement entre la position intermédiaire et la position recouvrante ainsi que le mécanisme de retrait des parties (9 ; 10).

4. Cabriolet (1) selon la revendication 3,
**caractérisé en ce que**
la tringlerie (16) relie la partie de revêtement (8) respective à un panneau arrière (20) de la carrosserie (4) délimitant l'habitacle des passagers.

5. Cabriolet (1) selon l'une quelconque des revendications 1 à 4,
**caractérisé en ce que**
lorsque le toit (2) est ouvert, l'extrémité de toit (5) avant reliée à un cadre de vitre de pare-brise lorsque le toit (2) est fermé est disposée dans la même orientation et son côté (6) orienté vers le haut lorsque le toit est fermé forme une surface de fermeture optique pour une partie essentielle de la zone centrale de l'ouverture d'entrée (3) et que les parties de revêtement (8) reposent, lorsque le toit (2) est ouvert, en côté et au moins en partie au-dessus des bords latéraux (7) de l'extrémité de toit (5) avant.

6. Cabriolet (1) selon l'une quelconque des revendications 1 à 5,
**caractérisé en ce que**
la seconde partie (10) est plus étroite que la première partie (9) et est logée dans celle-ci comme un tiroir (12).

7. Cabriolet (1) selon la revendication 6,
**caractérisé en ce que**
la seconde partie est plus large que la première partie et qu'elle englobe celle-ci de façon enveloppante.

8. Cabriolet (1) selon l'une quelconque des revendications 1 à 7,
**caractérisé en ce que**
les deux parties (9 ; 10) reposent l'une à côté de l'autre de façon plane avec leurs surfaces extérieures dans la position recouvrante.

9. Cabriolet (1) selon l'une quelconque des revendications 1 à 8,
**caractérisé en ce que**
au moins un rail de guidage (19) est prévu pour tirer la partie (10) à mobilité relative.

10. Cabriolet (1) selon l'une quelconque des revendications 1 à 9,
**caractérisé en ce que**
les parties (9 ; 10) de la partie de revêtement (8) en position imbriquée l'une dans l'autre peuvent être déplacées dans la position libérant la zone recouverte de l'ouverture d'entrée (3).

11. Cabriolet (1) selon l'une quelconque des revendications 1 à 10,
**caractérisé en ce que**
l'insertion et le retrait de la partie (10) à mobilité relative peuvent être réalisés dans une position recouvrante pour l'essentiel horizontale de l'autre partie (9).
